# EUROPÄISCHE PATENTSCHRIFT

(11) **EP 2 489 254 B1**
(45) Veröffentlichungstag und Bekanntmachung des Hinweises auf die Patenterteilung: **27.03.2019**
(21) Anmeldenummer: 11193942.7
(22) Anmeldetag: 16.12.2011
(51) Int. Cl.: A01F 29/10

(54) **Einzugsvorrichtung für einen Feldhäcksler**
Feed device for a forage harvester
Dispositif d'insertion pour une ramasseuse-hacheuse

(30) Priorität: 18.02.2011 DE 102011011658
(43) Veröffentlichungstag der Anmeldung: 22.08.2012
(73) Patentinhaber: CLAAS Saulgau GmbH, 88348 Bad Saulgau (DE)
(72) Erfinder: Oliva, Christoph, 88348 Bad Saulgau (DE); Winkler, Martin, 89077 Ulm (DE)

(56) Entgegenhaltungen:
- EP-A2- 1 797 753
- FR-A5- 2 047 233

## Beschreibung

Die Erfindung betrifft eine Einzugsvorrichtung für einen Feldhäcksler nach dem Oberbegriff des Anspruchs 1.

### Stand der Technik

Aus dem Stand der Technik ist ein Feldhäcksler mit einem der Häckseltrommel vorgelagerten Einzugsgehäuse für das zu häckselnde Erntegut bekannt. Dabei sind die Einzugs- und Vorpresswalzen mit Federn oder Hydraulikzylindern vorgespannt, bei dem die bewegbare, der Häckseltrommel direkt vorgelagerte, Vorpresswalze an einer ersten Lagerschwinge gelagert ist, die durch an Drehpunkten gelagerten Schwenkelementen mit einem Einzugsgehäuse verbunden ist.

Ein Ausführungsbeispiel dafür ist in der DE 10 2005 953 A1 dargestellt. Wenn Erntegut in Form einer Erntegutmatte in die Einzugsvorrichtung gelangt, werden die oberen Einzugswalzen entgegen der vorgespannten Federwirkung nach oben angehoben, welches Reaktionskräfte in den Lagern der Einzugs- und Vorpresswalzen erzeugt. Die Resultante der Reaktionskräfte verlaufen überwiegend lotrecht zur Förderrichtung des Ernteguts und sie stützen sich jeweils gegenseitig in den Lagern der gegenüberliegenden Vorpresswalze ab. Ihre Wirkungslinien verlaufen orthogonal zur Erntegutmatte und zugleich durch die Mittelpunkte der Lager des jeweiligen Vorpresswalzenpaares. Alle Vorpresswalzen der Vorpresswalzenpaare sind angetrieben und in Verbindung mit den Reaktionskräften der Vorspannfedern oder der Hydraulikzylinder entstehen Reibungs- und Verzahnungskräfte zwischen den Vorpresswalzen und der von diesen in Richtung Häckseltrommel geförderten Erntegutmatte, so dass aus der Kombination dieser Reibungs- und Verzahnungskräfte und den Drehmomenten der Vorpresswalzen die Vortriebskräfte für die Erntegutmatte hervorgehen.

Die Wirkungslinien dieser Vortriebskräfte sind überwiegend horizontal ausgerichtet. Die Reaktionskräfte der Vortriebskräfte müssen von den Lagern der Vortriebswalzen aufgenommen werden. Die Lager der unteren Vorpresswalzen werden ortsfest von den seitlichen Wänden des Einzugsgehäuses aufgenommen, und die Lager der oberen beweglichen Vorpresswalzen werden von Vorspannkräften beaufschlagten Lagerschwingen, aufgenommen werden.

Die Höhe der Anhebung der oberen an den Lagerschwingen gelagerten Einzugs- und Vorpresswalzen hängen von der Dicke der zugeführten Erntegutmatte ab und damit auch die Größe der Lagerkräfte. Diese hängen damit aber auch von der Elongation der Federwindungen ab, oder bei einer vergleichbaren hydraulischen Vorspannung vom hydraulischen Vorspanndruck und der Stellung der Kolbenstangen.

Die der Häckseltrommel vorgelagerte erste Vorpresswalze ist an ihren Lagerstellen in den freien Enden von Koppeln gelagert, deren andere gebundenen Enden ortsfest in den seitlichen Wänden des Einzugsgehäuses drehbar gelagert sind. Zugleich ist diese Lagerstelle der Koppel- bzw. Anschlagpunkt zwischen der die Vorpresswalzenlager aufnehmenden Lagerschwinge.

Die Reaktionskräfte der überwiegend horizontalen Vortriebskräfte der Erntegutmatte werden von den Koppeln in den Koppel- bzw. Anlenkpunkten zwischen Koppeln und Lagerschwingen von diesen aufgenommen. Diese Reaktionskräfte sind entgegen der Förderrichtung der Erntegutmatte gerichtet und sie können aufgrund der gelenkigen Lagerung der Koppeln lediglich Zugkräfte aufnehmen. Da aber die Wirkungslinie dieser Zugkraft nicht notwendigerweise identisch ist mit der Wirkungslinie der Reaktionskraft der Vortriebskraft im jeweiligen Koppelpunkt, wobei diese Kräfte bekanntlich Vektoren darstellen, erzeugen diese, sofern sie einen Winkel zueinander einnehmen, nach der Gesetzmäßigkeit des Kreuzprodukts der Vektorrechnung ein Drehmoment an der jeweiligen Koppel um den ortsfesten Lagerpunkt am Vorpressgehäuse.

Die Abstützung dieses Drehmoments erfolgt aber ebenfalls im Koppel- bzw. Anschlagpunkt zwischen Koppel und Lagerschwinge und dieses erzeugt eine Reaktionskraft, die lotrecht auf den Hebelarm der Koppel einwirkt. Diese Reaktionskraft muss gemäß den Gesetzmäßigkeiten der Vektoranalysis als Reaktionskraft aufgenommen werden und sie wird gemäß dem Stand der Technik von den Lagern der gegenüberliegenden Walze des Walzenpaares aufgenommen und sie erhöht, oder je nach Wirkungsrichtung mindert sie damit zugleich die Anpresskraft zwischen dem Walzenpaar und der Erntegutmatte. Die Größe und Wirkungsrichtung dieser Reaktionskräfte im Koppel- und Anlenkpunkt sind starken dynamischen Veränderungen unterlegen und sie nehmen Einfluss auf die Vorpresskraft und gegebenenfalls auf den Schlupf zwischen den Vorpresswalzen und der Erntegutmatte bei deren Vorwärtsbewegung.

Dieses dynamische Verhalten verursacht zusätzlich Schwingungsüberlagerungen sowohl im Antriebssystem, als auch in den Bewegungsabläufen der vertikalen und horizontalen Bewegungen der beweglichen Vorpresswalzen und sie beeinträchtigen damit insbesondere bel hohen Leistungsdurchsätzen die Laufruhe der Vorpresswalzen und der Häckseltrommel bis hin zu Resonanzerscheinungen in deren Antriebssystemen.

FR-A-2 047 233 offenbart einen Strohhäcksler mit einer Häckseltrommel und an Lagerschwingen angeordneten Walzen, welche gegenüber weiteren Walzen vorspannbar sind und zwischen welchen das Häckselgut hindurch zur Häckseltrommel gefördert wird, wobei die vorspannbaren Walzen auf Lagerschwingen gelagert sind, welche entgegen der Förderrichtung stromaufwärts an einer schwenkbeweglich gelagerten Koppel angelenkt sind.

### Aufgabenstellung

Die der Erfindung zu Grunde liegende Aufgabe wird darin gesehen, einen Feldhäcksler mit einer verbesserten Einzugs- und Vorpresseinrichtung Im Sinne eines ruhigeren schwingungsärmeren Laufes der Einzugs- und Vorpresswalzen bereitzustellen,

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen zu entnehmen.

Ein Feldhäcksler nach der Erfindung umfasst ein Einzugsgehäuse mit wenigstens zwei Paaren Vorpresswalzen, die jeweils aus einer unteren und einer oberen Vorpresswalze bestehen, die im Erntebetrieb eine Erntegutmatte zu einer Häckseltrommel fördern, welche mit Messern besetzt ist und die mit einer Gegenschneide zusammenwirken, um die Erntegutmatte in kleine Teile zu häckseln. Die der Gegenschneide gegenüberliegende Vorpresswalze, bei der es sich in der Regel jedoch nicht notwendigerweise um die obere Vorpresswalze handelt, ist orthogonal zur Flussrichtung der Erntegutmatte bewegbar und in der Regel durch Federkraft und/oder einen hydropneumatisch vorgespannten Hydraulikzylinder gegen die andere Vorpresswalze vorgespannt, um die gewünschte Vorpresswirkung zu erzielen.

Damit die dynamischen Kräfte, welche auf das Feder / Massesystem und damit auf die Vortriebswalzen einwirken, nicht durch weitere unnötig große Vorpresskräfte überlagert werden, welches dazu führt, dass die Antriebsdrehmomente an den Vorpresswalzen unnötig größer werden und die dass Feder / Massesystem zudem zu unnötig großen Schwingungsamplituden anregen würden, sind die Lagerschwingen zur Aufnahme der Lager der beweglichen Vorpresswalzen an ihren Koppeln, welche als Verbindungselemente zum Einzugsgehäuse dienen und die dort ortsfest angelenkt sind, so angelenkt, dass der Koppelpunkt entgegen der Gutflussrichtung vor der Lagerstelle der Vorpresswalze liegt, die der Häckseltrommel am nächsten vorgelagert ist. Dieses nimmt einen günstigen Einfluss auf die Beträge und Richtungen der Wirkungsrichtungen der zuvor dargelegten Reaktionskräfte am Anlenkpunkt zwischen Koppeln und Lagerschwingen und es ermöglicht zugleich einen höheren Erntegutdurchsatz, da die die kleineren der Häckseltrommel direkt vorgelagerten in der Oberflache glatten Vorpresswalzen bei großer Erntegutmattendicke kräftemäßig entlastet und die vorgelagerten im Durchmesser größeren Vorpresswalzen kräftemäßig zusätzlich belastet würden. Dadurch verändern sich die Beträge der Antriebsdrehmomente zugunsten der kleinen Vorpresswalzen und die großen und zugleich profilierten vorgelagerten Vorpresswalzen übernehmen dadurch größere Antriebsdrehmomente. Günstig hinzu kommt dabei, dass dadurch der Einschnüreffekt, den die kleineren Vorpresswalzen bei großer Erntegutmatte auf diese ausüben, wesentlich geringer ausfällt welches dazu beiträgt, Verstopfungen im Erntegutmattedurchfluss zu vermeiden.

Infolge des zuvor angesprochenen vektoriellen Kreuzprodukts, welches mitbestimmt wird von den Erntegutparametern der Erntegutmatte und insbesondere der Mattendicke, der Vorpresskräfte, der Umfangskräfte an den Vorpresswalzen und der Antriebsdrehmomente an den Vorpresswalzen, und der Größe der momentanen Vorspannkraft der Federn oder der hydropneumatisch vorgespannten Hydraulikzylinder als Vorspannzylinder, aber auch von der momentanen Lage und Ausrichtung der Koppeln und der Lagerschwingen, stellt sich ein Reaktionsmoment an den Koppeln ein, welches von einer Gegenkraft, auf der Erntegutmatte abgestützt wird.

Erfindungsgemäß wird entweder ein Teil oder sogar die gesamte Gegenkraft als Reaktionskraft auf die der Messertrommel weiter beabstandeten im Durchmesser größeren und mit Mitnehmerleisten bestückten Vorpresswalze, die der der Messertrommel direkt vorgelagerten Vorpresswalze stromaufwärts vorgelagert ist, abgestützt.

Dabei spielt die Lage des ortsfesten Anschlagpunkts und die momentane Ausrichtung der Koppel relativ zu den Vorpresswalzen und damit zur Gutflussrichtung der Erntegutmatte ebenfalls eine maßgebliche Rolle auf das gesamte dynamische Verhalten der Einzugswalzen des Feldhäckslers, welches sich günstig auf die Laufruhe des Antriebs und die Schwingbewegungen der Vorpresswalzen auswirkt, welches insbesondere den Schlupf zwischen Erntegutmatte und Vorpresswalzen minimiert.

Die Lagerschwingen können auch als Tandem-Lagerschwingen ausgebildet sein, in denen die wenigstens zwei Vorpresswalzen gelagert sind. Der Anlenkpunkt der Koppel an der Tandem-Lagerschwinge liegt erfindungsgemäß zwischen den Lagern der zumindest zwei Lagerungen der Vorpresswalzen.

In einer nicht beanspruchten Ausführungsform fallen die Anlenkpunkte mit den Drehachsen der von den Lagerschwingen aufgenommenen Lager der Vorpresswalze, welche der, der ersten der Häckseltrommel direkt benachbarten Vorpresswalze vorgelagert ist, zusammen. In einer weiteren nicht beanspruchten Ausführungsform nehmen die Koppeln in den Anlenkpunkten der Lagerschwinge selber die Lager der Vorpresswalze auf.

Die ortsfesten Lagerpunkte der Koppeln befinden sich vorzugsweise an der jeweils seitlichen Wand des Einzugsgehäuses und sie liegen vorzugsweise im Bereich der Fläche, welche definiert ist durch zwei Strahlen, die von der Drehachse der Häckseltrommel ausgehend die unterste und oberste Endlage der Lagerpunkte der Vorpresswalze, welche der, der ersten der Häckseltrommel direkt benachbarten Vorpresswalze vorgelagert ist, schneiden, wobei die Strahlen einen Öffnungswinkel (α) definieren, dessen Betrag im Bereich von etwa 30°± 10°,liegt.

In einer weiteren besonders bevorzugten Ausführung liegt der ortsfeste Lagerpunkt einer Koppel etwa auf der Winkelhalbierenden des Öffnungswinkels (α), wobei der Winkel (β) der Winkelhalbierenden eines Öffnungswinkels (α) vorzugsweise von 16° ± 4° aufweist.

Besonders vorteilhaft für Wartungsarbeiten kann das Einzugsgehäuse vom Häckslergehäuse abgeklappt werden, so dass dann ein ungehinderter Zugang zu den Messern der Häckseltrommel möglich ist, so wie dieses beispielsweise in der EP 1 452 088 A1 beschrieben ist. Um dieses problemlos zu ermöglichen liegen die ortsfesten Lagerpunkte der Koppeln dann vorzugsweise vor der Trennfuge zwischen dem Einzugsgehäuse und dem Häckseltrommelgehäuse, welches aber zur Realisierung der Erfindung nicht zwingend erforderlich ist.

Das nachfolgend beschriebene nicht beanspruchte Ausführungsbeispiel dient dazu, die technischen Zusammenhänge der Erfindung näher und beispielhaft zu erläutern.

### Ausführungsbeispiel

- Fig.1: ein vereinfacht dargestelltes Häckselaggregat in einer Seitenansicht mit minimal eingestelltem Einzugs- und Pressspalt.
- Fig.2: ein vereinfacht dargestelltes Häckselaggregat in einer Seitenansicht mit etwa maximal eingestelltem Einzugs- und Pressspalt.
- Fig.3: einen vergrößert dargestellten Ausschnitt aus Fig.1
- Fig.3a: Darstellung der Kraftverläufe an den oberen Walzen gemäß Fig.3
- Fig.3b: Darstellung der Kraftverläufe an der Koppel in der untersten Lage
- Fig.3c: Krafteck der Kraftverläufe an den oberen Walzen gemäß Fig.3
- Fig.4: einen vergrößert dargestellten Ausschnitt aus Fig.2
- Fig.4a: einen vergrößert dargestellten Ausschnitt aus Fig.4
- Fig.4b: Darstellung der Kraftverläufe an der Koppel in der obersten Lage
- Fig.4c: Krafteck der Kraftverläufe an den oberen Walzen gemäß Fig.4
- Fig.5: Darstellung der unteren und oberen Endlage der oberen Einzugswalzen

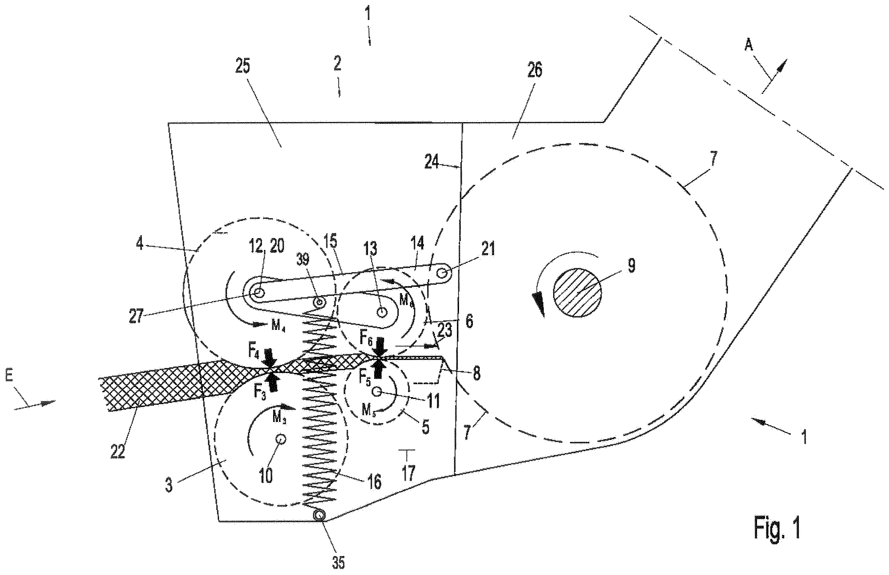

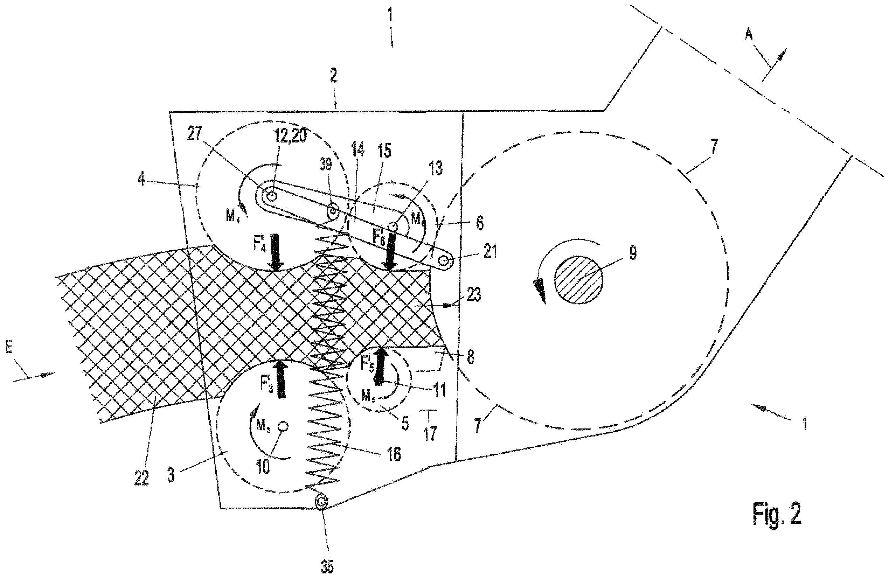

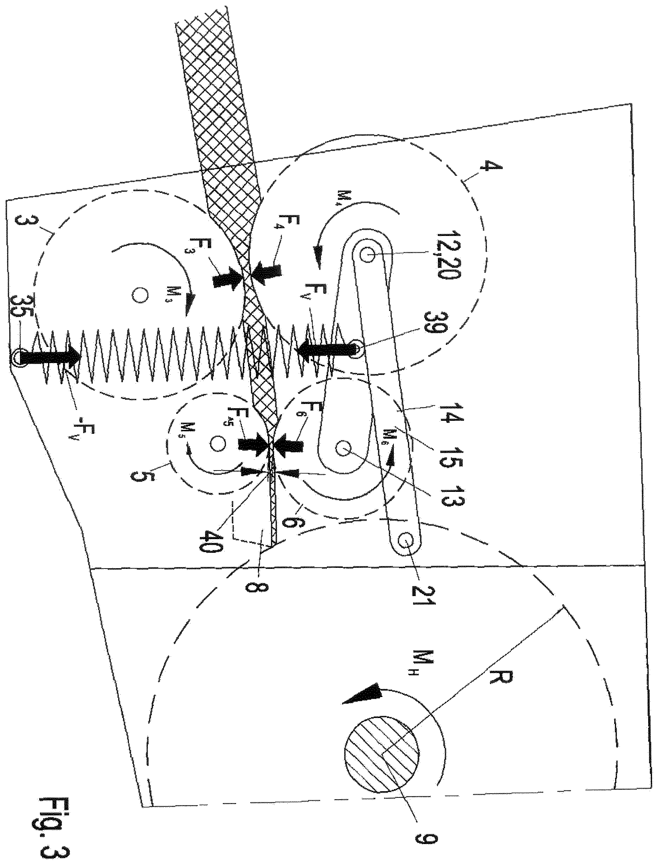

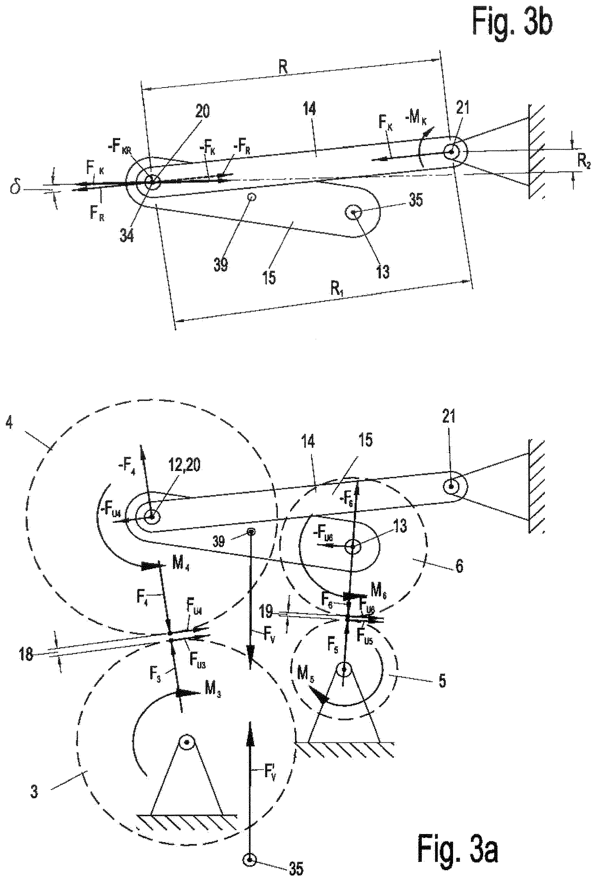

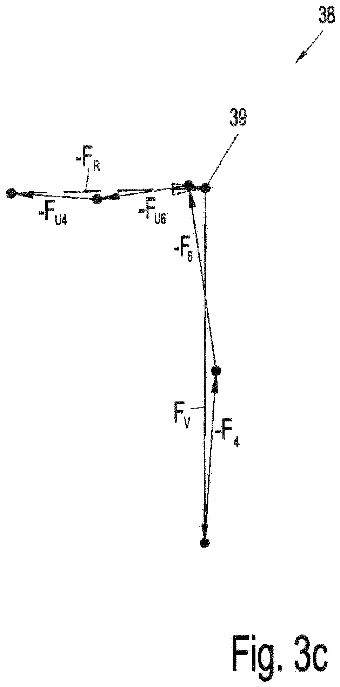

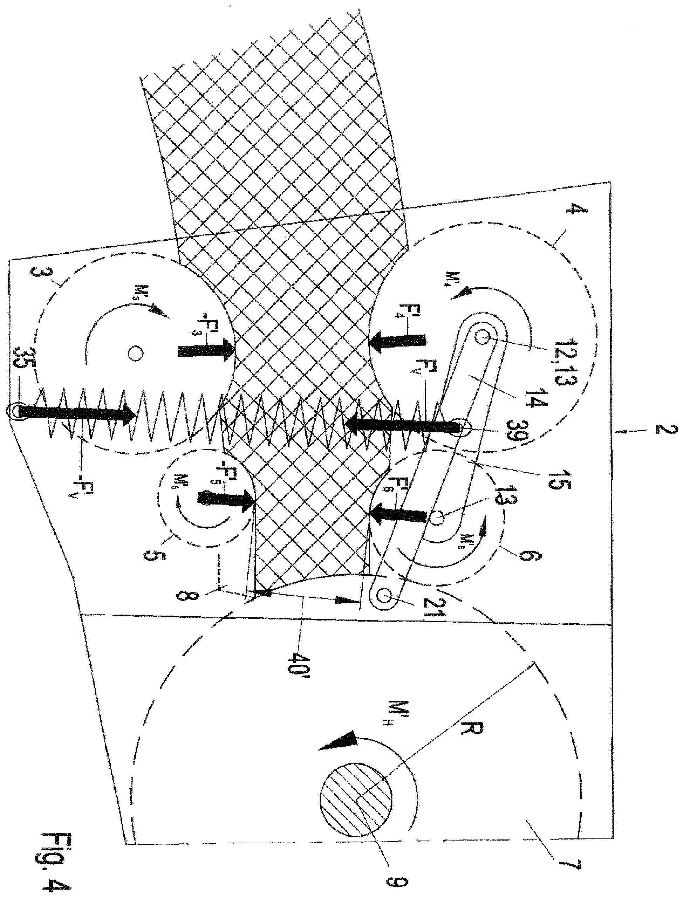

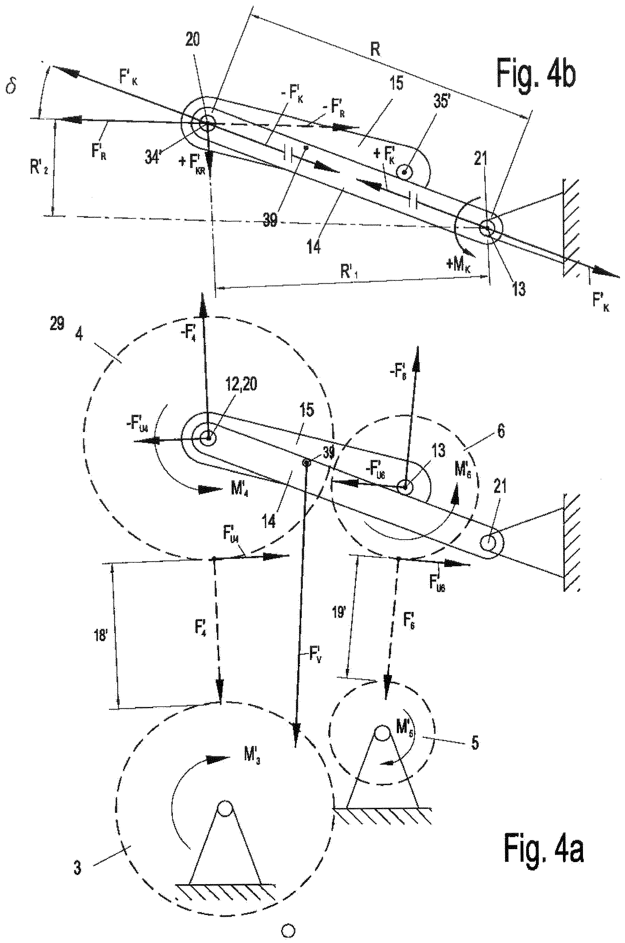

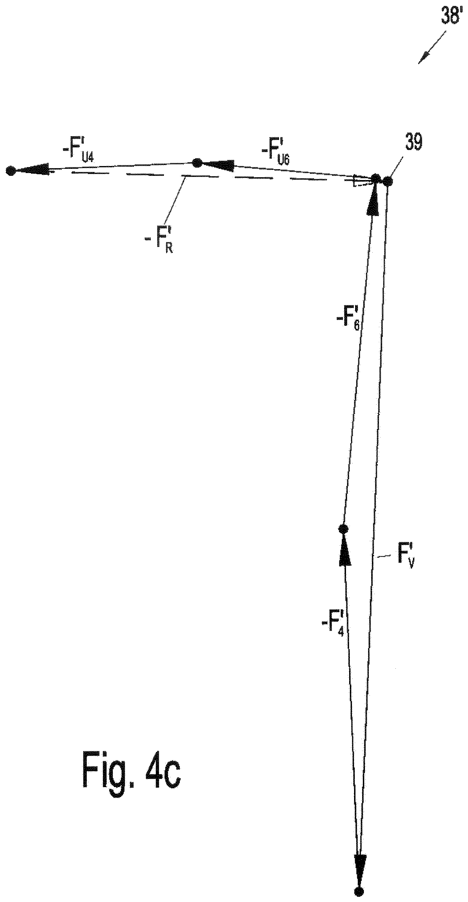

In Fig.1 und Fig. 2 ist ein vereinfacht dargestelltes Häckselaggregat 1 in einer Seitenansicht dargestellt und Fig.3 und Fig.4 zeigen je einen vergrößert dargestellten Ausschnitt aus Fig.1 bzw. Fig.2. Fig. 1 und Fig.3 zeigen ein Häckselaggregat 1 mit einer dünnen Erntegutmatte 22 und minimal eingestellter Einzugsspaltweite 18 und mit minimal eingestellter Pressspaltweite 19. Fig. 2 und Fig. 4 zeigen ein Häckselaggregat 1 mit einer dicken Erntegutmatte 22 und maximal eingestellter Einzugsspaltweite 18 und mit maximal eingestellter Pressspaltweite 19.

Fig.3a stellt die Kraftvektoren an den beweglichen Vorpresswalzen 4 und 6 gemäß Fig.3 mit minimaler Erntegutmattendicke 40 dar und Fig.4a stellt die Kraftvektoren an den beweglichen Vorpresswalzen 4 und 6 gemäß Fig.3 mit maximaler Erntegutmattendicke 40' dar. Das -Zeichen in Verbindung mit den Kraftvektoren in den Figurendarstellungen symbolisiert gemäß den Regeln der Vektoranalysis lediglich die unterschiedlichen Wirkungsrichtungen zweier miteinander in Wirkbeziehung stehender Kraftvektoren.

Fig. 3b zeigt die Reaktionskräfte an der Koppel 14 infolge der momentanen Antriebssituation der Presswalzen 3,4,5,6 und deren Antriebsdrehmomente M₃,M₄,M₅,M₆, sowie der Federvorspannkraft F_{V}, -F_{V} und der Lage und Ausrichtung der Koppel 14 im Raum und in Bezug auf den Anschlagpunkt 21 bei einer minimalen Schichtdicke der Erntegutmatte 22.

Fig. 4b zeigt die Reaktionskräfte an der Koppel 14 infolge der momentanen Antriebssituation der Presswalzen 3,4,5,6 und deren Antriebsdrehmomente M'₃,M'₄,M'₅,M'₆, sowie der Federvorspannkraft F'_{V}, und der Lage und Ausrichtung der Koppel 14 im Raum und in Bezug auf den Anschlagpunkt 21 bei einer maximalen Schichtdicke der Erntegutmatte 22.

In dem Häckslergehäuse 2 ist die Antriebswelle 9 mit der mit Häckslermessern bestückten Häckseltrommel 7 in den Seitenwänden dreh- und antreibbar ein Antriebsdrehmomente M_{H},M'_{H} erzeugend gelagert. Aus Gründen der Übersichtlichkeit ist die Häckseltrommel 7 lediglich durch ihre Außenkontur als Hüllkreis dargestellt. Die Gegenschneide 8 ist ebenfalls an den Seitenwänden des Häckslergehäuses 2 abgestützt. Häckselaggregate 1 dieser Art sind dabei gleichzeitig als Häckslergebläse ausgebildet, so dass der zu häckselnde Gutstrom, der durch den Einzugsspalt im Einzugsbereich E in bekannter weise in das Häckslergehäuse eintritt, nach dem Passieren der Häckseltrommel das Häckselaggregat durch den Ausgang A, ebenfalls in bekannter weise, wieder verlässt.

Im vorderen und offenen Einzugsbereich E des Häckslergehäuses 2 befinden sich die untere Einzugswalze 3 und obere Einzugswalze 4, welche den Einzugsspalt mit seiner Einzugsspaltweite 18,18' definieren. Zwischen den Einzugswalzen 3 und 4 und der Häckseltrommel 7 befinden sich die untere Presswalze 5 und obere Presswalze 6, die den Pressspalt mit seiner Pressspaltweite 19,19' definieren.

Die untere Einzugswalze 3 und die untere Presswalze 5 sind fest in den Lagern 10 und 11 der seitlichen Gehäusewände des Häckslergehäuses 2 eingebunden, wohin gegen die obere Einzugswalze 4 und die obere Presswalze 6 in den Lagern 12 und 13 in festgelegtem Abstand zueinander, jedoch schwenkbeweglich in beidseitig außerhalb des Häckslergehäuses 2 befindlichen Lagerschwingen 15 gelagert sind.

Die Schwenkbeweglichkeit bezieht sich dabei zum einen auf eine mögliche Schwenkbewegung um den Anlenkpunkt 20 und anderseits auch um eine weitere Schwenkbeweglichkeit um die Schwenkachse des Anschlagspunktes 21 der Koppel 14, wobei die Koppeln 14 beidseits des Häckslergehäuses 2 außerhalb der Seitenwände 17 fest an diese Anschlagspunkte 21 schwenkbeweglich gelagert sind.

In einer nicht beanspruchten Ausführung sind die Koppel 14, die Lagerschwinge 15 und die Lager 13 der vorgelagerten Presswalze 4 in einem gemeinsamen Drehpunkt 27 gelagert, wie in Fig. 1 und Fig.2 dargestellt.

Die Lagerschwinge 15 ist mittels einer Zugfeder 16, die zum einen in dem Anschlagpunkt 35 am Häckslergehäuses 2 und zum anderen im Anschlagpunkt 39 an der Lagerschwinge 15 selbst befestigt ist, ist mit einer Federvorspannkraft F_{V},F'_{V} beaufschlagt, wobei sich diese Federvorspannkraft F_{V},F'_{V} entsprechend der Lage des Anschlagpunkt 39 an der Lagerschwinge 15 als Lagerrektionen -F₄,-F₆ bzw. -F'₄,-F'₆ in den Lagern 10,11,12,13 abstützen.

Somit sind die Lagerschwingen 15 an in Anschlagpunkten 21 schwenkbeweglichen Koppeln 14, welche die Verbindungselemente zum Einzugsgehäuse 25 darstellen, in Anlenkpunkten 20 an deren Koppeln 14 so angelenkt, dass der jeweilige Anlenkpunkt 20 entgegen der Gutflussrichtung 23 vor dem Lager 13 der ersten, der Häckseltrommel 7 direkt benachbarten Vorpresswalze 6 liegt. Die Lagerschwinge 15 beinhaltet somit zumindest zwei Lager 12,13 zur Lagerung von wenigstens zwei Vorpresswalzen 5,6. Prinzipiell kann die Lagerschwinge 15 auch mehr als zwei Vorpresswalzen aufnehmen, beispielsweise auch drei Vorpresswalzen. Erfindungsgemäß liegt der Anlenkpunkt 20 zwischen den Lagern 12,13 der wenigstens zwei Vorpresswalzen 4,6.

Gemäß einer nicht beanspruchten Ausführung sind die Anlenkpunkte 20 der Lagerschwingen 15 mit den Drehachsen der Lager 12 der ersten Vorpresswalze 4, welche der der Häckseltrommel 7 direkt benachbarten Vorpresswalze 6 vorgelagert ist, in einem gemeinsamen Drehpunkt 27 gelagert und fallen somit zusammen.

Fig.3c zeigt nach den Regeln der Vektoranalysis das Krafteck 38 der Kraftverläufe an den oberen Walzen gemäß Fig.3 unter Zugrundelegung einer Federvorspannkraft F_{V} mit der Einheitskraft des Betrags I1I. Unterstellt ist dabei ein Reibfaktor von 0,5 zwischen der Erntegutmatte 22 und den Vorpresswalzen 3,4,5,6. Fig.4c zeigt analog Fig.3c das Krafteck 38', bezogen auf die Ausgangssituation mit der Einheitskraft mit dem Betrag I1I gemäß Fig.3c unter Zugrundelegung mit der sich einstellenden erhöhten Federvorspannkraft F'_{V} auf der Basis des Hook'schen Gesetzes. Somit zeigen die Kraftecke 38, 38' im direkten Vergleich die Kraftverhältnisse unter Zugrundelegung derselben Geometrie und zwar Fig.3c die Ausgangssituation mit geringst möglicher Erntegutmattendicke 40 der Erntegutmatte 22 und Fig.4c die Ausgangssituation mit größtmöglicher Erntegutmattendicke 40' der Erntegutmatte 22.

Ausgehend von der Geometrie und der Lage der Vorpresswalzen 3,4,5,6 zueinander, der Geometrie der Anlenkung der beweglichen Vorpresswalzen 4,6 an die Koppel 14 und der Lage des ortsfesten Anschlagpunktes 21 gemäß Fig. 3 und Fig.4 stellen sich die Walzenvorpresskräfte und deren Lagerreaktionen F₅,F'₅, F₆,F'₆, die Umfangskraft, Lagerreaktion F_{U3},-F_{U3}, F'_{U3},-F'_{U3}, F_{U4},-F_{U4}, F_{U5},-F_{U5}, F_{U6},-F_{U6}, F'_{U6},-F'_{U6}, sowie die das Krafteck schließende Reaktionskraft F_{R},F'_{R} ein. An den Vorpresswalzen 3,4,5,6 stellen sich die Antriebsdrehmomente M₃,M₃',M₄,M₄' ,M₅,M₅',M₆,M₆'ein. Letztere, die Reaktionskräfte F_{R},-F_{R},F'_{R},-F'_{R} halten das dynamische Kräftesystem im Gleichgewicht der Kräfte. Dabei kommt dem Betrag der Reaktionskräfte F_{R},F'_{R} sowie deren Angriffspunkt und deren Wirkungsrichtung eine entscheidende Bedeutung für die Dynamik der Laufruhe des gesamten Einzugs und Vorpresssystems zu. Diese nehmen maßgeblichen Einfluss auf die Lagerreaktionen an den Lagern 10,11,12,13 und damit zugleich auf die Größe der Vorpresskräfte an den Vorpresswalzen 3,4,5,6, indem die Reaktionskräfte F_{R},F'_{R} ein Drehmoment -M_{K},+M_{K} an der Koppel 14 erzeugen, welches sich am Anlenkpunkt 20 einer Koppel 14 in Form einer Reaktionskraft - F_{KR},+F_{KR} abstützt.

Dieses Dreh- oder Stützmoment -M_{K},+M_{K} ergibt sich aus dem vektoriellen Kreuzprodukt der Kraftvektoren F_{R} und F_{K} und dem diese einschließenden Winkel δ. Daraus abgeleitet über die Hebelarme R,R₁,R₂, bzw. R,R'₁,R'₂ ergibt sich die Reaktionskraft F_{R},F'_{R}, deren Wirkungslinie identisch ist mit der Ausrichtung der Wirkungslinie der Lagerreaktionen der Lager 10,11,12,13 im Raum.

Bei diesen Kräften -F_{KR},+F_{KR} handelt es sich um Kräfte, die sich je nach Lage des Anlenkpunkts 20 an den Lagern 10,11,12,13 der Vorpresswalzen 3,4,5,6 abstützen und welches bedeutet, dass sich diese nach dem Superpositionsprinzip den Walzenpresskräften F₃,F₄,F'₃,F'₄ überlagern. Je nach Wirkungsrichtung der Reaktionskraft -F_{KR},+F_{KR} und der Drehrichtung des Drehmoments -M_{K},+M_{K}, bzw. des Stützmoments an der Koppel 14 haben diese eine pro- oder antizyklische Verstärkungswirkung der Vorpresskräfte an den Vorpresswalzen zur Folge, welche zudem aufgrund der keineswegs steifen Erntegutmatte 22 mit dieser ein federndes Systems eingehen. Somit können diese Vorpresskräfte Schwingungen anregend auf das Feder-Massesystem, bestehend aus den Vorpresswalzen und den Zugfedern 16, einwirken. Kommt es dabei zusätzlich bedingt durch zu hohe Vorspannkräfte F₃,F₄,F₅,F₆ und Antriebsdrehmomente an den Vorpresswalzen insbesondere durch Abscherung am Erntgut zu Schlupf zwischen den glatten Vorpresswalzen 5,6, so wird der Fördervorgang der Erntegutmatte 22 diskontinuierlich und damit instabil.

Dieses hat im Sinne einer Rückkopplung Einfluss auf den Betrag und die Ausrichtung der Wirkungslinie der momentanen Reaktionskraft -F_{KR},+F_{KR} und damit auch auf den Betrag und Wirkungsrichtung des Drehmoments -M_{K},+M_{K} an den Koppeln 14, so dass sich in dessen Folge zugleich disharmonische Schwingungsvorgänge bis hin zu Resonanzerscheinungen an dem Feder-Massesystem der beweglichen Vorpresswalzen einstellen können. Ist dieses der Fall, so können sich auch aufgrund der momentanen Schwingungen im Feder-Massesystem der beweglichen Vorpresswalzen und in deren Folge einer diskontinuierlichen Förderbewegung der Erntegutmatte 22 stark wechselnde Drehmomentschwankungen im Antrieb der Häckseltrommel 7 einstellen, welches ebenfalls die Laufruhe des gesamten Häckselvorgangs erheblich beeinträchtigen kann. Die erfindungsgemäße Anlenkung der Koppeln 14 an die beweglichen Vorpresswalzen entlastet daher die Vorpresskräfte F₅ und F₆ an den glatten Vorpresswalzen 5,6 und verhindert somit den zuvor beschriebenen Einschnüreffekt und in dessen Folge den besagten unruhigen Lauf der Vorpresswalzen und des gesamten Häckselsystems.

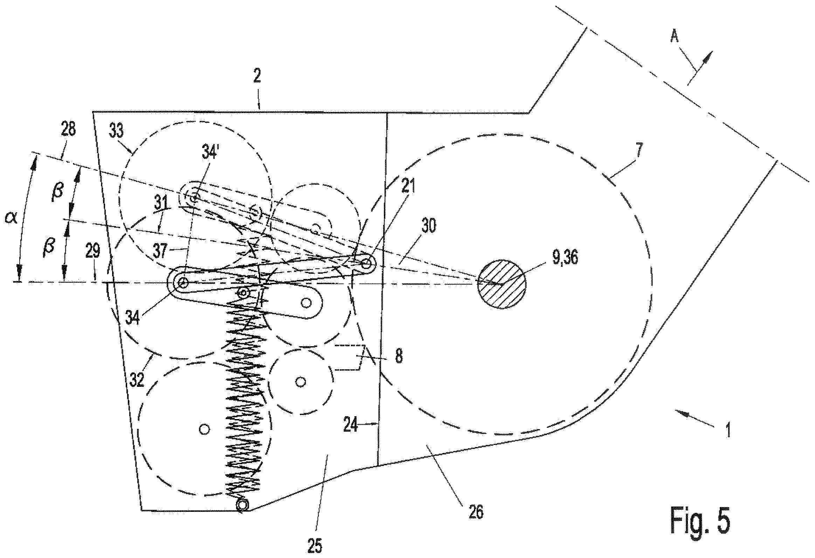

Dabei spielt in einer vorteilhaften Ausführungsform der Erfindung die Ausgestaltung der Anlenkung der Koppeln 14 insbsondere was die Lage des ortsfesten Anschlagpunktes 21 am Einzugsgehäuse 25 angeht, eine bedeutsame Rolle. Dieses verdeutlicht insbesondere die Fig.5.

In Fig.5 ist die untere Endlage 32 und obere Endlage 33 der oberen Presswalzen 2 und 6 dargestellt. Die ortsfesten Anschlagpunkte 21 der Koppeln 14 stützen sich an den Seitenwänden 17 des Einzugsgehäuses 25 ab.

Dabei liegt der ortsfeste Anschlagpunkt 21 einer Koppel 14 im Bereich der Fläche 30, welche definiert ist durch zwei eingrenzende Strahlen 28,29, die von der Drehachse 36 der Häckseltrommel 7 ausgehend die unterste und oberste Endlage 32,33 der Lagerpunkte 34,34' verlaufen und die weiterhin begrenzt wird durch die Verbindungslinie 37 der Lagerpunkte 34 und 34' der Vorpresswalze 4 in ihrer unteren 32 und oberen Endlage 33. Die Strahlen 28,29 schließen einen Öffnungswinkel (α) ein, dessen Betrag im Bereich von etwa 30°± 10°,liegt. Dabei liegt der ortsfeste Anschlagpunkt 21 einer Koppel 14 etwa auf der Winkelhalbierenden 31 des Öffnungswinkels (α).

Der Winkel (β) der Winkelhalbierenden 31 liegt vorzugsweise bei 16° ± 4°, welches bedeutet, dass der Anschlagpunkt 21 abweichend von Winkel β der Winkelhalbierenden 31 vorzugsweise auf einem Strahl liegt, welcher ausgehend vom Ursprungsort der Winkelhalbierenden 31 im Bereich des Winkels β ± 4° liegt.

Die Anschlagpunkte 21 der Koppeln 14 liegen vor der Trennfuge 24 zwischen dem Einzugsgehäuse 25 und dem Häckseltrommelgehäuse 26, wobei die Trennfuge 24 vorteilhaft einen geraden Verlauf nimmt.

Durch diese Anordnung der Koppel 14 an die Lagerschwinge 15 in Verbindung mit deren Anschlagpunkten 21 werden die Koppeln 14 in ihrer Längserstreckung länger und kopieren dadurch besser den Radius R der Häckseltrommel 7. Dies bedeutet, dass die Abstandsdifferenz der der Häckseltrommel 7 am nächsten liegenden Presswalze 6 kleiner gehalten wird und der Winkel a, den die Koppeln 14 dann überstreichen müssen, um die max. Dicke der Erntegutmatte 22 zu erreichen, ebenfalls kleiner gehalten wird. Damit wird auch die etwa lotrecht zur Gutflussrichtung 23 verlaufende Kraftkomponente F_{KR} F'_{KR}, die die Vorpresswalzen bei kleiner Erntemattendicke nach oben ziehen kann, ebenfalls gering gehalten.

Erfindungsgemäß liegt der Anlenkpunkt 20 zwischen den beiden beweglichen Vorpresswalzen 4 und 6 und die Kraftkomponente F_{KR} F'_{KR} kann damit auf beide Vorpresswalzen 4 und 6 verteilt werden. Dies ist auch und gerade in der oberen Walzenpositionen vorteilhaft, weil dann die Kraftkomponente F'_{KR} immer nach unten wirkt. Das Ergebnis ist ein ruhigerer Lauf der Vorpresswalzen 4,6, eine bessere und ausgeglichene Vorpressung aller Walzen, ein optimaler Vorschub der Erntegutmatte bei geringstem Widerstand in der Vorwärtsbewegung, und damit auch eine bessere Häckselqualität. Es liegt im Wesen der Erfindung, dass die beweglichen Vorpresswalzen des Feldhäckslers auch über Dämpfungsmittel, beispielsweise über hydraulische Stoßdämpfers verfügen. Aber ungeachtet dessen liefert die Erfindung ein wesentlich ruhigeres Laufverhalten, als dieses ohne die Merkmale der Erfindung der Fall sein würde.

### Bezugszeichenliste

- 1: Häckselaggregat
- 2: Häckslergehäuse
- 3: Vorpresswalze, untere Einzugswalze
- 4: Vorpresswalze, obere Einzugswalze
- 5: Vorpresswalze, untere Presswalze
- 6: Vorpresswalze, obere Presswalze
- 7: Häckseltrommel
- 8: Gegenschneide
- 9: Antriebswelle
- 10: Lager
- 11: Lager
- 12: Lager
- 13: Lager
- 14: Koppel
- 15: Lagerschwinge
- 16: Zugfeder
- 17: Seitenwand
- 18,18': Einzugsspaltweite
- 19,19': Pressspaltweite
- 20: Anlenkpunkt
- 21: Anschlagpunkt
- 22: Erntegutmatte
- 23: Gutflussrichtung
- 24: Trennfuge
- 25: Einzugsgehäuse
- 26: Häckseltrommelgehäuse
- 27: gemeinsamer Drehpunkt
- 28: Strahl
- 29: Strahl
- 30: Fläche
- 31: Winkelhalbierende
- 32: untere Endlage
- 33: obere Endlage
- 34,34': Lagerpunkt
- 35: Anschlagpunkt der Feder
- 36: Drehachse
- 37: Verbindungslinie
- 38,38': Krafteck
- 39,39': Anschlagpunkt der Feder
- 40,40': Erntegutmattendicke

- F_{V}, F'_{V}: Federvorspannkraft
- F₃,F'₃: Walzenpresskraft, Lagerreaktion
- F₄,-F₄: Walzenpresskraft, Lagerreaktion
- F'₄,-F'₄: Walzenpresskraft, Lagerreaktion
- F₅,F'₅: Walzenpresskraft, Lagerreaktion
- F₆,-F₆: Walzenpresskraft, Lagerreaktion
- F'₆,-F'₆: Walzenpresskraft, Lagerreaktion
- F_{U3},-F_{U3}: Umfangskraft, Lagerreaktion
- F_{U4},-F_{U4}: Umfangskraft, Lagerreaktion
- F'_{U4},-F'_{U4}: Umfangskraft, Lagerreaktion
- F_{U5},-F_{U5}: Umfangskraft, Lagerreaktion
- F_{U6},-F_{U6}: Umfangskraft, Lagerreaktion
- F'_{U6},-F'_{U6}: Umfangskraft, Lagerreaktion
- F_{R},-F_{R}: resultiere Stützkraft
- F'_{R},-F'_{R}: resultiere Stützkraft
- F_{K},F'_{K},: Reaktionskraft
- +F'_{K},-F'_{K}: Reaktionskraft (Zugkraft in der Koppel)
- +F_{KR},-F'_{KR}: Reaktionskraft

- M₃,M'₃: Antriebsdrehmomente
- M₄,M'₄: Antriebsdrehmomente
- M₅,M'₅: Antriebsdrehmomente
- M₆,M'₆: Antriebsdrehmomente
- -M_{K},+M_{K}: Drehmoment, Stützmoment
- M_{H},M'_{H}: Antriebsdrehmomente

- A: Ausgang
- E: Einzugsbereich, Eingang, Eingangsseite
- R: Hebelarm
- R₁,R'₁: Hebelarm
- R₂,R'₂: Hebelarm

- α: Öffnungswinkel
- β: Winkel
- δ: Winkel

## Patentansprüche

1. Feldhäcksler mit einer Häckseleinheit, bestehend aus einer dreh- und antreibbaren in einem Häckslergehäuse gelagerten Häckseltrommel (7) und einem der Häckseltrommel (7) vorgeordneten Einzugsgehäuse (25) mit wenigstens zwei dreh- und antreibbaren ortsfest gelagerten Vorpresswalzen (3, 5) und wenigstens zwei dreh- und antreibbaren Vorpresswalzen (4,6) die in Lagerschwlngen (15) gelagert sind, wobei zwischen diesen Vorpresswalzen (3, 5; 4, 6) eine Erntegutmatte (22) hindurch geführt und zu der unmittelbar stromab der Vorpresswalzen (5, 6) angeordneten Häckseltrommel (7) gefördert wird, wobei jede der Lagerschwingen (15) in einem Anlenkpunkt (20) von einer Koppel (14) aufgenommen ist, die ihrerseits in einem ortsfesten Anschlagspunkt (21), ausgebildet als Schwenklager, mit dem Einzugs- oder Häckselgehäuse verbunden von diesem aufgenommen Ist, wobei die beweglichen Vorpresswalzen (4, 6) mittels wenigstens einer eine Vorspannkraft erzeugenden Elnrichtung gegenüber den ortsfest gelagerten Vorpresswalzen (3, 5) vorgespannt werden können, wobei der Anlenkpunkt (20) der Lagerschwinge (15) an der schwenkbeweglich gelagerten Koppel (14), entgegen der Gutflussrichtung (23) und stromaufwärts beabstandet vor dem Lager (13) der ersten, der Häckseltrommel (7) direkt benachbarten Vorpresswalze (6), liegt, **dadurch gekennzeichnet, dass** der Anlenkpunkt (20) zwischen den Lagern (12,13) der wenigstens zwei Vorpresswalzen (4,6) liegt.

2. Feldhäcksler nach Anspruch 1, **dadurch gekennzeichnet, dass** die Lagerschwinge (15) zumindest die zwei Lager (12,13) der wenigstens zwei Vorpresswalzen (5,6) aufnimmt,

3. Feldhäcksler nach Anspruch 1, **dadurch gekennzeichnet, dass** sich die ortsfesten Anschlagpunkte (21) der Koppeln (14) an den Seitenwänden (17) des Einzugsgehäuses (25) abstützen.

4. Feldhäcksler nach Anspruch 3, **dadurch gekennzeichnet, dass** die ortsfesten Anschlagpunkte (21) der Koppeln (14) im Bereich der Fläche (30) liegen, welche eingeschlossen und begrenzt ist einerseits durch zwei einen Öffnungswinkel (α) der Häckseltrommel (7) ausgehend die untere (32) und obere Endlage (33) der Lagerpunkte (34,34') der der Häckseltrommel (7) direkt benachbarten Vorpresswalze (6) vorgelagerten Vorpresswalze (4) schneiden und die andererseits begrenzt ist von einer Verbindungslinie (37) zwischen den Lagerpunkten (34) und (34').

5. Feldhäcksler nach Anspruch 4, **dadurch gekennzeichnet, dass** der Öffnungswinkel (α) im Bereich von etwa 30°± 10°liegt.

6. Feldhäcksler nach Anspruch 3 und 4, **dadurch gekennzeichnet, dass** der Anschlagpunkt (21) einer Koppel (14) etwa auf der Winkelhalbierenden (31) des Öffnungswinkels (α) liegt.

7. Feldhäcksler nach Anspruch 6, **dadurch gekennzeichnet, dass** der Anschlagpunkt (21) abweichend von Winkel (β) der Winkelhalbierenden (31) auf einem Strahl liegt, welcher ausgehend vom Ursprungsort der Winkelhalbierenden (31) im Bereich des Winkels β ± 4° liegt.

8. Feldhäcksler nach Anspruch 3, **dadurch gekennzeichnet, dass** die Anschlagpunkte (21) der Koppeln (14) vor der Trennfuge (24) zwischen dem Einzugsgehäuse (25) und dem Häckseltrommelgehäuse (26) liegen.

## Claims

1. A forage harvester with a chopping unit consisting of a rotatable and drivable chopping drum (7) mounted in a chopping housing and a pickup housing (25) disposed in front of the chopping drum (7) with at least two rotatable and drivable fixedly mounted pre-press rollers (3, 5) and at least two rotatable and drivable pre-press rollers (4, 6) which are mounted in bearing links (15), wherein a crop mat (22) is fed through between these pre-press rollers (3, 5; 4, 6) and conveyed to the chopping drum (7) disposed immediately downstream of the pre-press rollers (5, 6), wherein each of the bearing links (15) is accommodated in an articulation point (20) of a coupler (14) which in turn is accommodated in a fixed anchor point (21) configured as a pivot bearing connected to the intake or chopping housing, wherein the movable pre-press rollers (4, 6) can be prestressed against the fixedly mounted pre-press rollers (3, 5) by means of at least one device producing a pre-stressing force, wherein the articulation point (20) of the bearing link (15) is positioned on the pivotably mounted coupler (14) against the direction of flow of crop (23) and in the upstream direction in front of the bearing (13) of the first pre-press roller (6) directly adjacent to the cutting drum (7), **characterized in that** the articulation point (20) is positioned between the bearings (12, 13) of at least two pre-press rollers (4, 6).

2. The forage harvester as claimed in claim 1, **characterized in that** the bearing link (15) accommodates at least the two bearings (12, 13) of the at least two pre-press rollers (5, 6).

3. The forage harvester as claimed in claim 1, **characterized in that** the fixed anchor points (21) of the couplers (14) are supported on the side walls (17) of the intake housing (25).

4. The forage harvester as claimed in claim 3, **characterized in that** the fixed anchor points (21) of the couplers (14) are positioned in the region of the area (30) which is enclosed in and delimited on the one hand by two radials (28, 29) defining an angle of opening (α), which extend from the rotary axis (36) of the drive shaft (9) of the chopping drum (7), passing through the lower (32) and upper end position (33) of the bearing points (34, 34') of the pre-press roller (4) mounted in front of the pre-press roller (6) mounted directly adjacent to the chopping drum (7), and which is delimited on the other hand by a connecting line (37) between the bearing points (34) and (34').

5. The forage harvester as claimed in claim 4, **characterized in that** the angle of opening (α) is in the region of approximately 30° ± 10°.

6. The forage harvester as claimed in claim 3 and claim 4, **characterized in that** the anchor point (21) of a coupler (14) is positioned approximately on the angle bisector (31) of the angle of opening (α).

7. The forage harvester as claimed in claim 6, **characterized in that** the anchor point (21), deviating from the angle (β) of the angle bisector (31), lies on a radial which, extending from the origin of the angle bisector (31), lies in the region of the angle β ± 4°.

8. The forage harvester as claimed in claim 3, **characterized in that** the anchor points (21) of the couplers (14) are positioned in front of the joint (24) between the intake housing (25) and the chopping drum housing (26).

## Revendications

1. Ensileuse comprenant une unité de hachage, constituée d'un tambour hacheur (7), monté de manière rotative et entraînable dans un carter de hachage, et d'un carter d'alimentation (25), disposé en amont du tambour hacheur (7), avec au moins deux rouleaux de précompression (3, 5) montés fixes de manière rotative et entraînable et avec au moins deux rouleaux de précompression rotatifs et entraînables (4, 6) qui sont montés dans des bras porteurs oscillants (15), entre ces rouleaux de précompression (3, 5 ; 4,6) défilant un tapis de produit récolté (22) qui est convoyé vers le tambour hacheur (7) disposé directement en aval des rouleaux de précompression (5, 6), chacun des bras porteurs oscillants (15) étant reçu en un point d'articulation (20) par une bielle (14) qui, pour sa part, est reçue en un point de butée fixe (21) conformé en palier pivotant par le carter d'alimentation ou de hachage en étant reliée à celui-ci, les rouleaux de précompression mobiles (4, 6) pouvant être précontraints par rapport aux rouleaux de précompression montés fixes (3, 5) au moyen d'au moins un équipement produisant une force de précontrainte, le point d'articulation (20) du bras porteur oscillant (15) se trouvant sur la bielle montée oscillante (14) en avant et à distance du palier (13), à l'opposé de la direction d'écoulement de produit (23) et en amont, du premier rouleau de précompression (6) directement voisin du tambour hacheur (7), **caractérisée en ce que** le point d'articulation (20) se trouve entre les paliers (12, 13) des au moins deux rouleaux de précompression (4, 6).

2. Ensileuse selon la revendication 1, **caractérisée en ce que** le bras porteur oscillant (15) reçoit au moins les deux paliers (12, 13) des au moins deux rouleaux de précompression (5, 6).

3. Ensileuse selon la revendication 1, **caractérisée en ce que** les points de butée fixes (21) des bielles (14) prennent appui sur les parois latérales (17) du carter d'alimentation (25).

4. Ensileuse selon la revendication 3, **caractérisée en ce que** les points de butée fixes (21) des bielles (14) se trouvent dans la zone de la surface (30) qui est incluse et limitée, d'une part, par deux demi-droites (28, 29) définissant un angle d'ouverture (α), lesquelles, partant de l'axe de rotation (36) de l'arbre d'entraînement (9) du tambour hacheur (7), coupent la position extrême inférieure (32) et supérieure (33) des points de support (34, 34') du rouleau de précompression (4) disposé en amont du rouleau de précompression (6) directement voisin du tambour hacheur (7) et, d'autre part, par une ligne de jonction (37) entre les points de support (34 et 34').

5. Ensileuse selon la revendication 4, **caractérisée en ce que** l'angle d'ouverture (α) se situe dans la plage d'environ 30° ± 10°.

6. Ensileuse selon la revendication 4, **caractérisée en ce que** le point de butée (21) d'une bielle (14) se trouve sensiblement sur la bissectrice (31) de l'angle d'ouverture (α).

7. Ensileuse selon la revendication 6, **caractérisée en ce que**, s'écartant de l'angle (β) de la bissectrice (31), le point de butée (21) se trouve sur une demi-droite qui, à partir de l'origine de la bissectrice (31), se trouve dans la plage de l'angle β ± 4°.

8. Ensileuse selon la revendication 3, **caractérisée en ce que** les points de butée (21) des bielles (14) se trouvent en avant du joint de séparation (24) entre le carter d'alimentation (25) et le carter de tambour hacheur (26).
